# EUROPEAN PATENT APPLICATION

(11) **EP 4 843 847 A1**
(43) Date of publication of application: **25.11.2026**
(21) Application number: 25177314.9
(22) Date of filing: 19.05.2025
(51) Int. Cl.: B60T 17/00, B01D 53/04, B01D 53/26

(54) **AIR DRYER FOR A PNEUMATIC SYSTEM OF A COMMERCIAL VEHICLE**

(71) Applicant: ZF CV Systems Europe BV, 1170 Brüssel (BE)
(72) Inventor: OWSIAK, Kamil, 50-506 Wroclaw (PL)
(74) Representative: Copi, Joachim

(57) **Abstract**

The invention refers to an air dryer (4) for a pneumatic system of a commercial vehicle, said air dryer (4) being operatable in a supply mode and a purge mode, said air dryer (4) comprising:
an air dryer casing (24),
a supply connection (25) to be connected to a compressor, an outlet connection (26) to be connected to a multi-circuit protection valve device, a regeneration connection to be connected to said M multi-circuit protection valve device,
a safety valve being connected to said supply connection (25),
a purge valve being connected to said supply connection (25) and being pneumatically controlled by said regeneration connection,
wherein a a purge valve assembly (34) is mounted in said air dryer casing (24), said purge valve assembly (34) comprising a piston (38), said piston (38) being biased by a spring force of a purge valve spring (44) and being displaceable by compressed air (8) supplied via said regeneration connection against said purge valve spring (44), wherein said purge valve assembly (34) implements said purge valve and said safety valve,
wherein a passage for compressed air is provided in said purge valve assembly (34), said passage being open in said purge mode and closed in said supply mode by said piston (38).

## Description

The invention relates to an air dryer for a pneumatic system of a commercial vehicle and a process for assembling the air dryer.

### Background of the invention

Air dryers of commercial vehicles are in particular provided to supply air to pneumatic systems like pneumatic brakes, pneumatic suspension systems or pneumatic assistant devices in the commercial vehicle. The air supply system generally comprises a compressor and an air dryer connected with its supply inlet to the compressor, for drying and filtering the compressed air delivered by the compressor. The air dryer therefore comprises air dryer cartridge, in particular with a specific desiccant, and a valve arrangement for initializing several modes. The compressed air delivered by the compressor and dried in the air dryer is then delivered to a multi-circuit protection valve device, which delivers the compressed air to the relevant pneumatic consumer circuits. The compressed air is dried and filtered in a supply mode, in which the supplied air flows through the air dryer cartridge to a supply outlet. The air dryer cartridge is regenerated in a regeneration mode, in which compressed air from the multi-circuit protection valve device is delivered to a regeneration path of the air dryer and flows through the air dryer cartridge and an open purge valve to a venting outlet, in particular through a silencer. A safety valve is connected to the supply inlet, with an opening pressure of e.g. 14 bar, in order to protect the pneumatic system and the valve equipment against an overload or pressure peaks.

The air dryer is preferably constructed with an air dryer casing comprising the relevant connections to the compressor and to the multi-circuit protection valve. The valve arrangement is realized by additional parts or elements contained in the Air dryer casing.

However, current designs of the air dryers often include sealing lips and O-rings, which are exposed to high dynamic airflow. The regeneration mode, which is controlled by the pressure applied to the regeneration path, can be realized by means of a piston that is sealed and placeable in the casing of the air dryer; however, the sealing or tightness between the piston and the casing or an insert part is generally realized by means of a dynamic O-ring or sealing lip that are exposed to the air flow. The sealing lip usually has a relatively small area where the pressure is applied, making it impossible to narrow tolerance ranges for safety functions. In addition, the sealing can be lost or displaced. For example, a sealing lip used to seal the piston of the purge valve is usually pressed (or friction connection) onto its place and exposed to dynamic forces that can loosen it.

### Summary of the invention

Therefore, an object of the invention to provide an air dryer which enables a high safety in operation modes, a small wear of components, and which is relatively easy to assemble.

According to one aspect of the invention, an air dryer according to claim 1 is provided. According to a second aspect of the invention, a process for assembling the air dryer is provided. Further, a pneumatic system comprising the air dryer is provided. The invention is further directed to a commercial vehicle comprising the pneumatic system.

The inventive air dryer comprises an air dryer casing with relevant connections, in particular with a supply connection serving as supply inlet, to be connected to a compressor, an outlet connection serving as air dryer supply outlet to be connected to a multi-circuit protection valve device for subsequent consumer circuits, and a regeneration connection serving as regeneration port to be connected to said multi-circuit protection valve device. The air dryer casing preferably comprises an air dryer flange for mounting an air dryer cartridge.

The inventive air dryer can be operated in at least the two relevant modes of a pneumatic system which are a supply mode for drying compressed air and supplying it to the multi-circuit protection valve device and a regeneration mode for regeneration of the air dryer cartridge and preferably venting the purge air.

For this purpose, a a purge valve assembly (or purge valve insert subassembly) is mounted in the air dryer casing. In the purge valve assembly, a piston is slidably received and preloaded by a purge valve spring, in particular preloaded or biased against the bottom plate being screwed into the insert. The purge valve function and a safety valve function are preferably realized by the piston and the purge valve spring acting on the piston. The safety valve is relevant in supply mode, for limiting an air pressure of the compressed air to a pressure limit of e.g. 14 bar, in particular in case of pressure higher than working pressure due to any malfunctions that lead to overpressure.

Thus, a relatively simple design of the air dryer is realized, wherein the piston and the purge valve spring preloading the piston can be used for both functions, the safety valve function and the purge valve function.

These two functions can preferably be realized by exposing specific areas of the piston to the compressed air; thus, different areas of the piston are pressurized in the two operation modes, i.e. the supply mode and the regeneration mode.

The invention thus offers several benefits:
The use of an additional external safety valve connected to the supply line is not necessary; this safety function can be fulfilled completely inside the air dryer, preferably by only realizing an additional pneumatic safety control of the purge valve, which does not need additional elements.

The falling out of sealings or a leaking of sealing lips on the piston can be avoided, The wear of the dynamic O-ring due to grease blowing out effect can be avoided, A narrow tolerance range of the safety valve is possible.

Repairing or replacing is enhanced, since the purge valve assembly can be easily screwed out, rather than replacing the elements separately.

Further advantages of the invention are:
A central heating system above the valve system can be provided which is able to heat the area in which ice can form in a very efficient way,
A bonded sealing valve without parting line feature can be realized; therefore it is less possible that sealing valve falls out or leaks
The air dryer PUV - only subcomponent of air dryer is preferably in a cartridge form, service and assembly are therefore much easier and faster. Thus, an easy serviceability of a complete subassembly is achieved.

A silencer can be implemented to the air dryer PUV subassembly.

A wide range of selection of air flow cross-section through PUV is possible, with no significant limits for valve diameter and piston stroke.

Furthermore, the backpressure is lower than in prior art devices.

A very precise range of tolerance of the opening pressure of the integrated safety valve is possible. The height or vertical dimension is relatively small and thus the device is very compact.

According to a preferred embodiment, a purge sealing is provided on the piston, the purge sealing preferably contacting a valve seat of the purge valve assembly. In particular, a control area of the piston to be pressurized in the regeneration mode is surrounding the piston as a ring or annular area, thereby forming a greater area than the part of the purge sealing exposed to pressurized air in the supply mode. The functions of the safety valve and purge valve thus can be realized with the same piston-spring combination.

According to a preferred embodiment, the purge sealing is provided in a central position of the piston, in particular tub-shaped or frustro-conical reception of the piston. Thus, the sealing can be realized as plate-shaped, for example circular sealing mounted onto the piston. Preferably, the purge sealing is a face sealing. According to a preferred embodiment, the purge sealing can be mounted or attached with a vulcanization or a cohesive means or a glue. Preferable, the purge sealing is mounted without press-fit, without mechanical strain or without mechanical tension. This inventive arrangement has advantages over prior art solutions with a sealing lips provided on a circumferential face of the piston, since the prior art sealing lip is difficult to mount and to fix; thus, it is often only press-fitted; further, a purge sealing positioned from above on top of the piston, preferably with a vulcanization or gluing cannot be removed by the air flow.

According to a preferred embodiment, the purge valve assembly comprises an insert body wherein the piston is provided displaceable, preferably longitudinal displaceable in said insert body and comprises preferably a control area,
said control area being connectable to said regeneration connection in said regeneration mode for pushing said piston against said spring force of said purge valve spring, thereby opening said passage. This allows for a simple design, wherein the purge valve assembly can be screwed into the air dryer casing. The piston can be sealed against the insert body by dynamic O-rings, for example a lower dynamic O-ring and upper dynamic O-ring, for forming the control chamber in the regeneration path.

These dynamic O-rings, particularly the upper dynamic O-ring of the piston, can be covered from the air flow in the purge mode, for example by an upper cover shield or collar formed by the insert body. Therefore, a safe and tight provision of the piston in the insert body of the purge valve assembly can be realized, and there is no greasing blowing out effect, which increases the valve's lifetime. Furthermore, the lower dynamic O-ring can preferably in the same way be protected by a lower cover shield, in particular protruding downwards from the piston.

According to a preferred embodiment, the piston inserted in the insert body comprises a central part, in particular formed as a protruding dome, with a top face on which the purge sealing is mounted. Thus, the purge sealing can be mounted on top of the piston, and the area of the purge sealing can be designed independently of the other functions of the piston

According to a preferred embodiment, the piston inserted in the insert body has a lower part with a larger cross-section, being preferably guided in the insert part with a lower O-ring, and an upper part with a smaller cross-section, being preferably guided in said insert part with an upper O-ring. a control area to be pressure controlled is preferably formed between a lower, larger chamber face of the lower part and an upper, smaller chamber face of the upper part. This results in an area difference or effective control area which is responsible for pushing the piston by the control pressure; thus, a relatively small control pressure can be used to push the piston and to open a passage between the purge sealing and a counter bearing. This defines an important benefit compared to prior art solutions with e.g. a cylindrical piston, which can only be pushed by relatively smaller area, corresponding to higher control pressure necessary.

Guided by a lower dynamic O-ring and an upper dynamic O-ring, stable and secure movement of the piston in the insert body is guaranteed.

According to a preferred embodiment, the piston inserted in the insert body is hollow and/or comprises windows for an air passage from the open purge valve position through the piston interior to a purge exhaust. This enables a direct air flow with low resistance.

A simple design and easy assembly can be achieved with a bottom plate for supporting the purge valve spring. This allows the piston with the purge sealing fitted, the spring and the bottom plate to be mounted in the insert body of the purge insert. The bottom plate can, for example, be screwed into an internal thread of the insert body, providing a secure support for the purge valve spring.

The inventive process of assembling the air dryer module therefor preferably comprises the steps:
- manufacturing the piston and fixing the purge sealing on top of the piston, preferably by gluing or vulcanizing,
- assembling the piston, inserting O-rings in grooves of the piston, assembling the purge valve spring, and the bottom plate in the purge insert, in particular in the insert body of the purge valve assembly, and screwing the purge valve assembly, in particular its insert body, into the air dryer casing.

According to a preferred embodiment, a supply connection, an outlet connection, and a regeneration connection are formed in said air dryer casing,
wherein said air dryer casing comprises an air dryer flange,
wherein an air dryer cartridge is mounted on said air dryer flange,
wherein said air dryer cartridge comprises an air dryer inlet connected to said supply connection and an air dryer outlet connected to said outlet connection.

The invention is hereinafter described in more detail with reference to the appended drawings, in which
- Fig. 1: is a first perspective sectional view of an air dryer according to an embodiment of the invention, in supply mode, in non-hatched and hatched representation;
- Fig. 2: is a second perspective sectional view of the air dryer of figure 1, rotated by 90°, in non-hatched and hatched representation;
- Fig. 3: a sectional view corresponding to figure 2, in supply mode;
- Fig. 4: a sectional view of the air dryer of figure 3 in regeneration mode;
- Fig. 4a: an enlarged detail in Fig. 4,
- Fig. 5: a sectional perspective view of a a purge valve assembly with mounted silencer, according to an embodiment of the invention, in non-hatched and hatched representation
- Fig. 6: a non-cutaway view of figure 5;
- Fig. 7: a block diagram of a pneumatic system with the air dryer,
- Fig.7a: an enlarged view of the purge valve in figure 7;

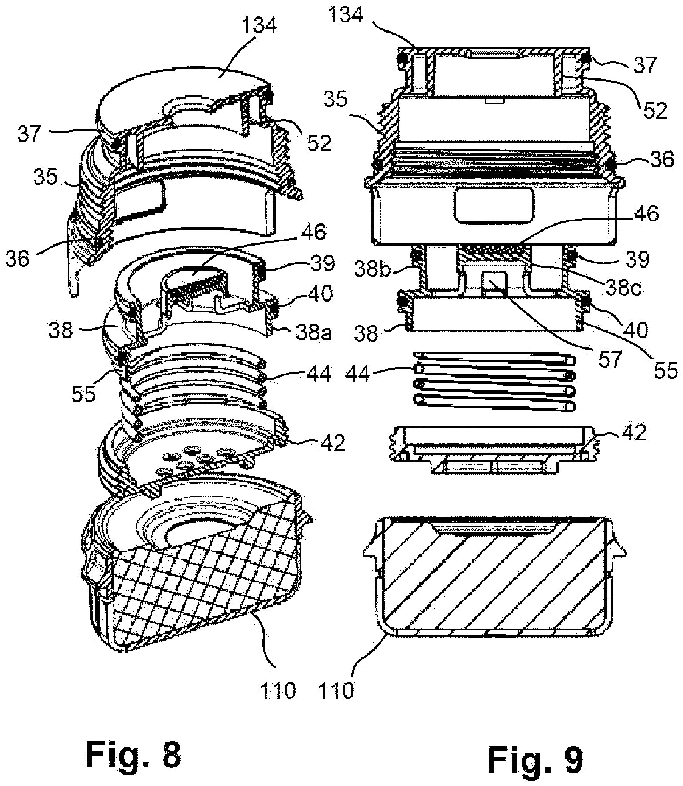

- Fig. 8: a perspective sectional exploded view of a purge valve assembly according to the embodiment;
- Fig. 9: a sectional exploded view of the purge valve assembly;

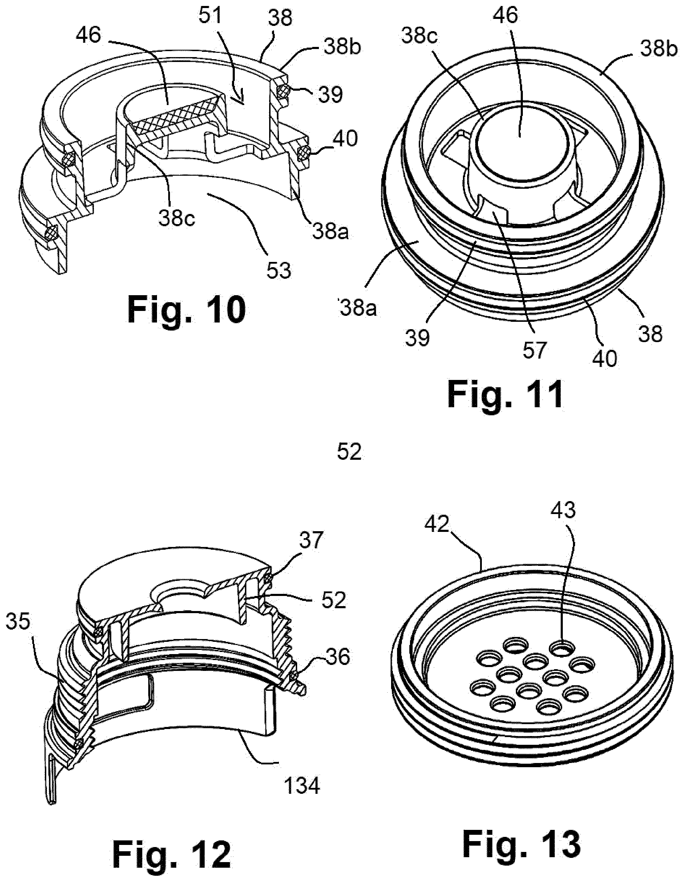

- Fig. 10: the piston in perspective sectional view;
- Fig. 11: the piston in perspective view;
- Fig. 12: the insert body in perspective sectional view; and
- Fig. 13: the bottom plate in perspective view.

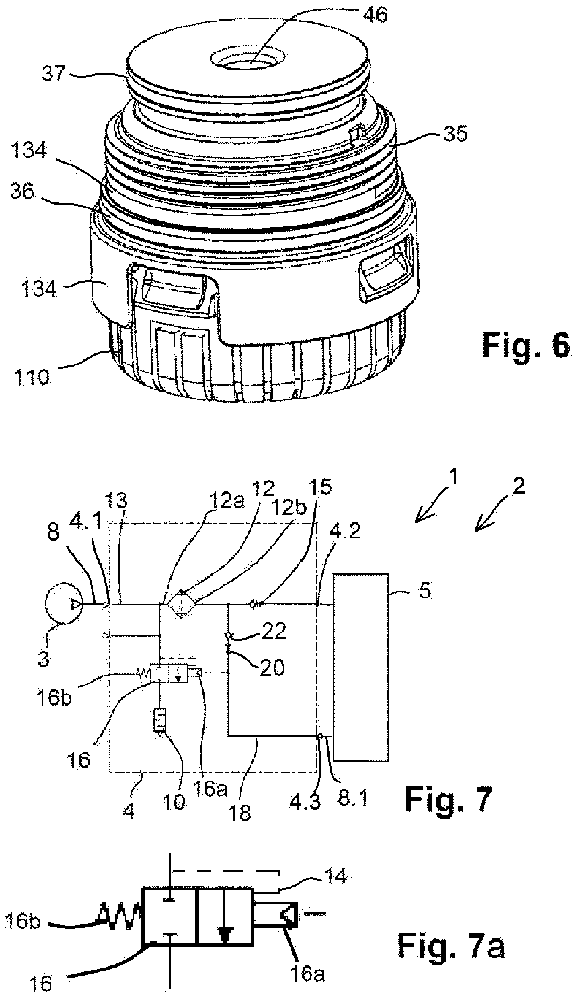

Figure 7 shows the most relevant parts of a pneumatic system 1 of a commercial vehicle 2 according to the invention; the pneumatic system 1 comprises a compressor 3, an air dryer 4, and a multi-circuit protection valve device MCPV 5 for connecting several pneumatic consumer circuits. In a supply mode I, the compressor 3 supplies compressed air 8 into a supply inlet 4.1 of the air dryer 4, which dries and filters the compressed air 8 and transfers the dried compressed air 8 via its outlet 4.2 to the MCPV 5. In a regeneration mode II, dried system air 8.1 is delivered by the MCPV 5 to a regeneration port 4.3 of the air dryer 4 and vented via a silencer 10. Thus, the silencer 10 constitutes a venting outlet of the air dryer 4; however, the silencer 10 might be provided outside of the air dryer 4.

For this purpose, the air dryer 4 comprises the following relevant functional elements: an air dryer cartridge 12, with filter, and a safety valve line 14, both connected to the supply inlet 4.1, a system check valve 15 provided between the air dryer cartridge 12 and the outlet 4.2, a pneumatically controlled purge valve 16 provided between the supply inlet 4.1 and the silencer 10, and a regeneration path 18 between the regeneration port 4.3 and an air dryer outlet 12b of the air dryer cartridge 12. The regeneration path 18 comprises a throttle 20 and a regeneration check valve 22 and acts on a pneumatic control 16a of the pneumatically controlled 2/2 purge valve 16.

In the supply mode I, the compressor 3 supplies compressed air 8 via the supply inlet 4.1 and a supply line 13 to an air dryer cartridge inlet 12a of the air dryer cartridge 12, through the air dryer cartridge 12 to its air dryer cartridge outlet 12b and via the system check valve 15 to the outlet 4.2. In the regeneration mode II, the MCPV 5 delivers dried compressed system air 8.1 via the regeneration port 4.3 and the regeneration path 18 to the air dryer outlet 12b, wherein the compressed system air 8.1 is decompressed by the throttle 20 thereby lowering the pressure and flow speed. The delivered air flows backwards through the air dryer cartridge 12 and the open purge valve 16 to the silencer 10. The pressure in the regeneration path 18 thus switches the purge valve 16 from the shown closed basic position into its open position. For this reason, the purge valve 16 comprises a pneumatic control 16a and a purge valve spring 16b. The system check valve 15 protects system pressure against backflow during regeneration. The safety valve line 14 serves to open the purge valve 16 at pressure of e. g. 18 bar.

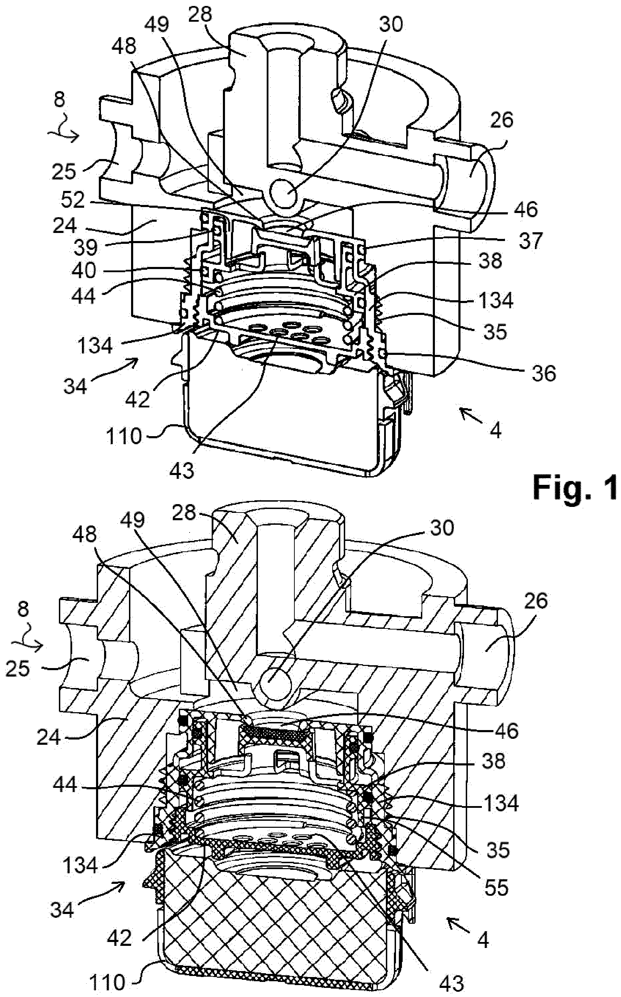

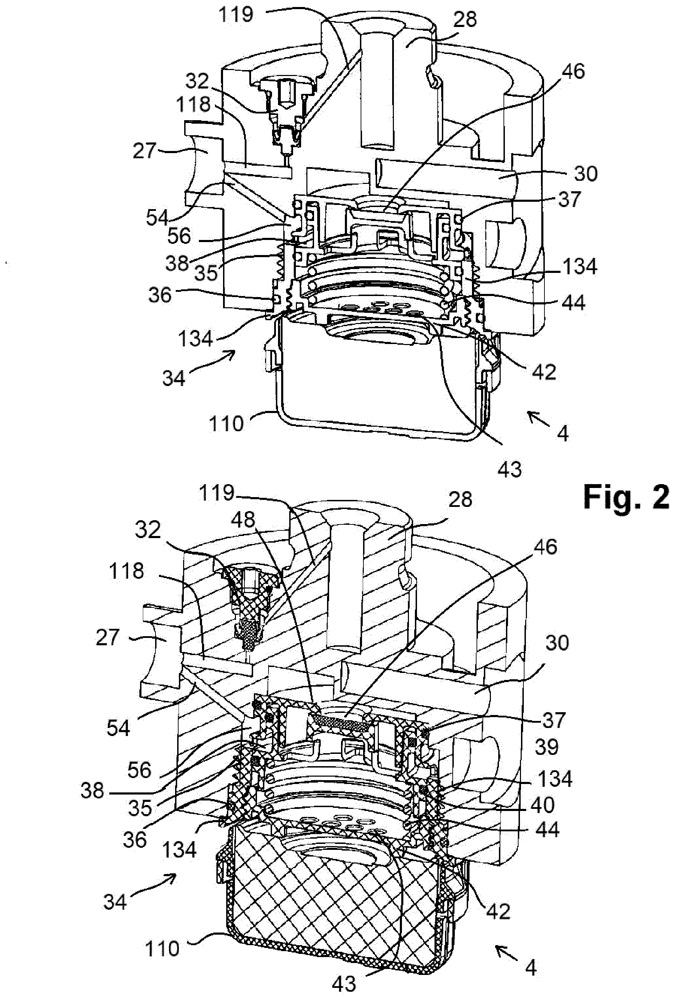

Figures 1 to 6 describe a preferred embodiment of the invention, wherein figures 1 to 4 show the air dryer 4 without the air dryer cartridge. The sectional view of figure 2 is rotated by 90° with respect to the sectional view of figure 1, in which the air dryer 4 is in its supply mode I, which is the basic mode.

An air dryer casing 24, preferably made of cast metal, comprises a supply connection 25 serving as the supply inlet 4.1 of figure 7, for connecting a supply line from the compressor 3, an outlet connection 26 and a regeneration connection 27. The air dryer cartridge 12 is to be mounted on the air dryer casing 24, in particular on an air dryer flange 28. The air dryer casing 24 further comprises a heater bore 30 for a central heating system, a throttle insert 32 screwed into the air dryer casing 24 and a purge valve assembly (or purge valve insert subassembly) 34 also screwed into the air dryer casing 24. The purge valve assembly 34 therefore has an insert body 134, which has a thread 35 and is sealed by a lower static O-ring 36 and an upper static O-ring 37 against the air dryer casing 24. A piston 38 is slidably contained in the insert body 134 and sealed by an upper dynamic O-ring 39 and a lower dynamic O-ring 40. The insert body 134 comprises an upper cover shield 52 provided radially inwards of said upper piston part 38b for protecting the upper dynamic O-ring 39 against an air stream; furthermore, a lower cover shield 55 protrudes from the piston 38 for protecting the lower dynamic O-ring 40 against an air stream. Thus, both dynamic O-rings 39, 40 are protected, in particular separated and/or encapsulated from the air streams.

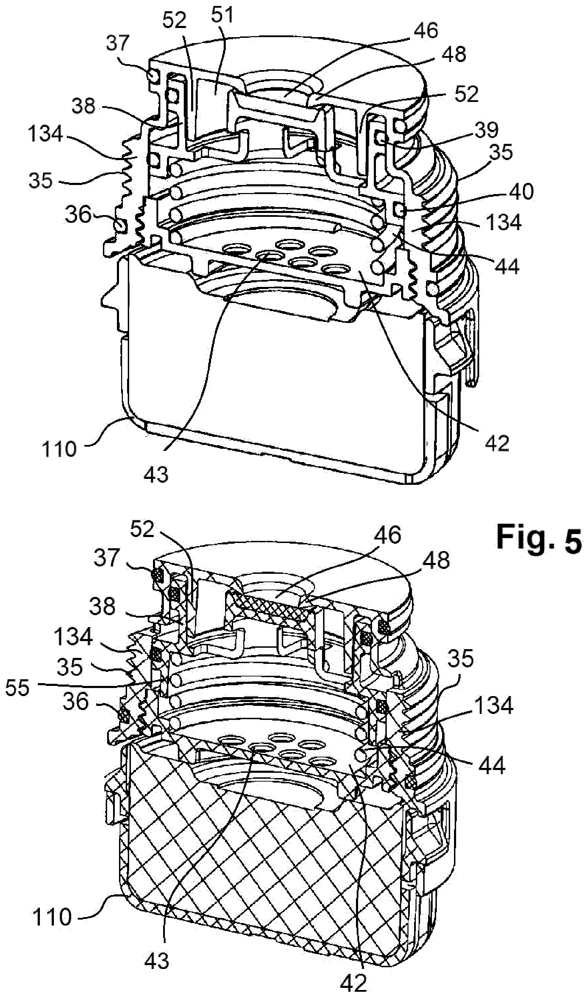

A bottom plate 42 with at least one opening 43 is fixed, in particular screwed, into the insert body 134 and serves as a thrust bearing for a purge valve spring 44 which preloads the piston 38 upwards. A purge sealing 46 is fixed on a central part 38c of the piston 38; the purge valve spring 44 presses the purge sealing 46 against a valve seat 48 provided in a central position of a top face of the insert body 134. These details can be seen more clearly in figures 5 and 6 only showing the purge valve assembly with the silencer 110. The central part 38c is preferably formed like a dome protruding upwards.

In the supply mode I, compressed air 8 from the compressor 3 enters the supply connection 25 of the air dryer casing 24 and flows to a supply chamber 49 above the purge valve assembly 34, corresponding to the supply line 13 of figure 7 between the supply inlet 4.1 and the air dryer cartridge inlet 12a. The purge sealing 46 and the purge valve spring 44 together serve as the safety valve line 14 of figure 7; the compressed air 8 presses onto the purge sealing 46, against the spring force of the purge valve spring 44. If the pressure of the compressed air 8 exceeds a safety pressure threshold, e. g. 14 bar, the pressure force is greater than the spring force and the piston 38 is pushed downwards, thereby opening a passage between the purge sealing 46 and the valve seat 48, for safety venting of the supply chamber 49. Otherwise, if the pressure of the compressed air 8 is below the safety pressure threshold, the compressed air 8 flows to the air dryer cartridge 12 - not shown in figures 1 to 6 - and afterwards via the system check valve 15 - not shown in figures 1 to 6 - to the outlet connection 26.

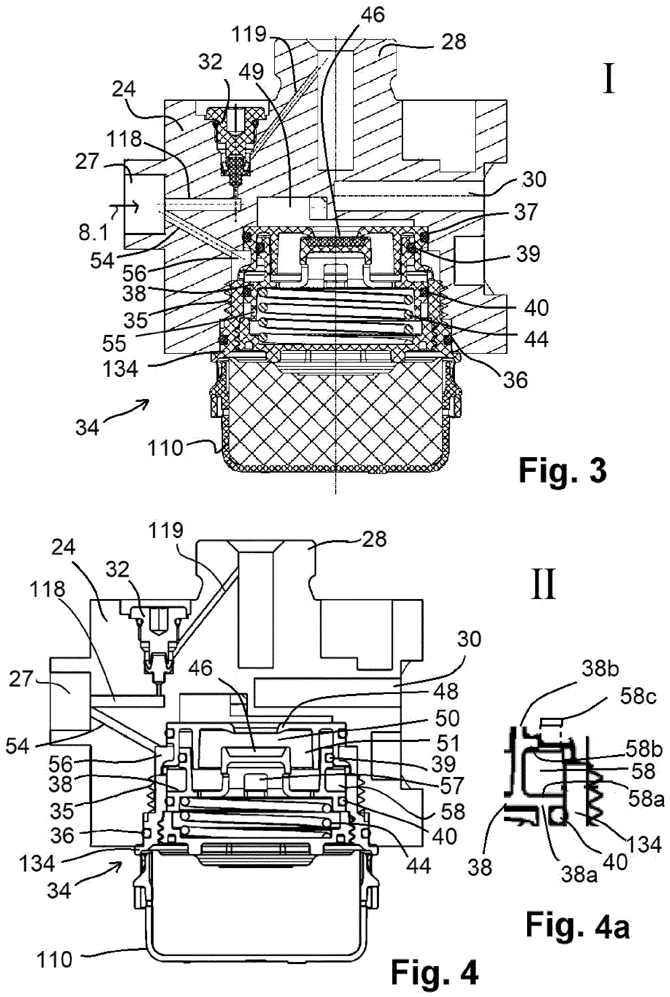

In the regeneration mode II shown in Figure 4, the compressed system air 8.1 flows through the regeneration connection 27 and a first regeneration path channel 118 to the throttle insert 32, which serves as the throttle 20 and regeneration check valve 22 of figure 7, and through a second regeneration channel 119 to the air dryer flange 28 and thus to the air dryer outlet 12b of the air dryer cartridge 12 - not shown in figure 4 -, via the air dryer cartridge 12 and the air dryer inlet 12a to the supply chamber 49.

In addition, the compressed system air 8.1 supplied by the MCPV 5 to the regeneration connection 27 flows through a control passage 54 provided in the air dryer casing 24 to a control chamber 56 which acts onto a control area 58 of the piston 38, the control area 58 extending circumferentially around the piston 38. As can be seen from Fig. 4 and the enlarged detail of Fig. 4a, the piston 38 has a lower part 38a with a larger cross-section, being guided in said insert part 134 with the lower dynamic O-ring 40,
and an upper part 38b with a smaller cross-section, being guided in said insert part 134 with the upper dynamic O-ring 39. The control area 58 acts on both parts 38a and 38b; thus, the control area 58 is formed between a lower, larger chamber face 58a of the lower part 38a and an upper, smaller chamber face 58b of the upper part 38b. This results in an area difference 58c depicted in Fig. 4a, which corresponds to area difference 58c = lower area 58a - upper area 58b,

The control pressure p58 in the chamber area 58 acting on both areas 58a and 58b therefore results in a pressure force F, which is calculated by multiplying the impinged area, which is the area difference 58c, with the pressure:
F = p58 * area difference 58c.

The area difference 58c can be designed; thus, a relatively small control pressure p58 can be used to push the piston 38 and to open the passage 50. This defines an important benefit compared to prior solutions with e.g. a cylindrical piston, which can only be pushed by relatively small pressure due to small area. The control area 58 corresponds to the pneumatic control 16a of the purge valve 16 in Fig. 7. In regeneration mode II, the compressed system air 8.1 exerts a total downward pressure force, due to the area difference 58c, on the piston 38 against the spring force of the purge valve spring 44 and pushes the piston 38 downward.

The passage 50 between the purge sealing 46 and the valve seat 48 is thus opened and the system air 8.1 flows from the regeneration connection 27 via cartridge and regenerating the cartridge and to the open passage 50 to an outer space 51 surrounding the middle part of the piston 38. Then the compressed system air 8.1 flows through piston windows 57 provided in the piston 38 to the piston interior 53 of the piston 38 and is vented through the silencer 110. The purge valve spring 44 is thus used both as for biasing the purge valve 16 against the pneumatic control 16a and for biasing the safety function in figure 7. For this reason, the control area 58 of the piston 38 is larger than the area of the purge sealing 46 which is exposed to the compressed air 8 in the supply mode I of Figures 1 and 3, and therefore the pneumatic force exerted on the piston 38 in the regeneration mode II of Fig. 4 is greater than the pneumatic force exerted on the piston 38 in the supply mode I of Fig. 3. This design feature allows a compact and cost-saving hardware implementation.

The electric heating system inserted in the heater bore 30 is preferably placed directly above the purge valve assembly 34 and its parts; the inserted heater system heats the air dryer casing 24 and the parts inserted in the air dryer casing 24, provided above the air dryer casing 24, from a central position.

The assembly of the air dryer 4 is relatively simple. The purge sealing 46 can be fixed and e.g. vulcanised onto a counter face of the piston 38. Therefore, the purge sealing 46 cannot be removed or lost during the use of the air dryer 4. The piston 38 and the purge valve spring 44 are received between the bottom plate 42 and the insert body 134, by screwing the bottom plate 42 into the insert body 134. The purge valve assembly 34 of figures 5, 6 is then screwed into the air dryer casing 24. The throttle insert 32 is also screwed into the air dryer casing 24, and the air dryer cartridge 12 is mounted on the air dryer casing 24.

### List of reference numerals (part of the description)

- 1: pneumatic system
- 2: commercial vehicle
- 3: compressor
- 4: air dryer
- 4.1: supply inlet
- 4.2: outlet
- 4.3: regeneration port
- 5: multi-circuit protection valve device MCPV
- 8: compressed air
- 8.1: system air
- 10: silencer
- 12: air dryer cartridge
- 12a: air dryer cartridge inlet
- 12b: air dryer cartridge outlet
- 13: supply line
- 14: safety valve function line
- 15: system check valve
- 16: purge valve
- 16a: pneumatic control of the purge valve
- 16b: purge valve spring
- 18: regeneration path

- 20: throttle
- 22: regeneration check valve
- 24: air dryer casing
- 25: supply connection
- 26: outlet connection
- 27: regeneration connection
- 28: air dryer flange

- 30: heater bore
- 32: throttle insert
- 34: a purge valve assembly
- 35: thread of the insert body 134
- 36: lower static O-ring of the insert body 134
- 37: upper static O-ring of the insert body 134
- 38: piston
- 38a: lower piston part
- 38b: upper piston part
- 38c: central part of the piston 38
- 39: upper dynamic O-ring guiding the lower part of the piston 38

- 40: lower dynamic O-ring guiding the lower part of the piston 38
- 42: bottom plate
- 43: opening in bottom plate 42
- 44: purge valve spring
- 46: purge sealing
- 48: valve seat
- 49: supply chamber

- 50: passage
- 51: outer space
- 52: upper cover shield protruding from the insert body 134
- 53: piston interior
- 54: control passage in the air dryer casing 24
- 55: lower cover shield protruding from the piston 38
- 56: control chamber
- 57: piston windows
- 58: control area
- 58a: lower, larger chamber face 58a
- 58b: upper, smaller chamber face 58b
- 58c: area difference
- 110: silencer
- 118: regeneration path channel in the air dryer casing 24
- 119: second regeneration channel in the air dryer casing 24
- 134: insert body of the purge valve assembly 34

## Claims

1. An air dryer (4) for a pneumatic system (1) of a commercial vehicle (2), said air dryer (4) being operable in a supply mode (I) and a purge mode (II), said air dryer (4) comprising:
an air dryer casing (24),
a supply connection (25) to be connected to a compressor (3), an outlet connection (26) to be connected to a multi-circuit protection valve device (5), a regeneration connection (27) to be connected to said multi-circuit protection valve device (5),
a supply line (13) between said supply connection (25) and said outlet connection (26),
a purge valve (16) being connected to said supply connection (25) and being pneumatically controlled by said regeneration connection (27),
a safety valve function line (14) for venting said supply line (13) by a pneumatic safety control of said purge valve (16),
wherein a purge valve assembly (34) is mounted in said air dryer casing (24), said purge valve assembly (34) comprising a piston (38), said piston (38) being biased by a spring force of a purge valve spring (44) and being displaceable by compressed air (8.1) supplied via said regeneration connection (27) against said purge valve spring (44),
wherein said purge valve assembly (34) implements said purge valve (16) and said safety valve (14),
wherein a passage (50) for compressed air is provided in said purge valve assembly (34), said passage (50) being open in said purge mode (II) and closed in said supply mode (I) by said piston (38).

2. The air dryer (4) according to claim 1, wherein
a purge sealing (46) is fixed or attached on said piston (38) or on top of said piston (38),
a valve seat (48) of said purge valve (16) is provided in said purge valve assembly (34), and
said passage (50) is provided between said purge sealing (46) and said valve seat (48).

3. The air dryer (4) according to claim 2, wherein
said purge sealing (46) is a face sealing an/or is glued or vulcanised on or on top of said piston (38).

4. The air dryer (4) according to one of the preceding claims, wherein said purge valve assembly (34) comprises an insert body (134), wherein said piston (38) is displacebly provided in said insert body (134) and comprises a control area (58),
said control area (58) being connectable to said regeneration connection (27) in said purge mode (II) for pushing said piston (38) against said spring force of said purge valve spring (44), thereby opening said passage (50).

5. The air dryer (4) according to claim 4, wherein said insert body (134) comprises a thread (35) and is screwed into said air dryer casing (24) and sealed against said air dryer casing (24),
said purge valve spring (44) being supported in said insert body (134).

6. The air dryer (4) according to claim 5, wherein said purge valve spring (44) is supported by a bottom plate (42) mounted in said insert body (134),
said bottom plate (42) comprising at least one opening (43) for venting air.

7. The air dryer (4) according to one of claims 4 to 6,
wherein said piston (38) comprises an upper piston part (38b) and a lower piston part (38a),
said upper piston part (38b) having a smaller cross-section than said lower piston part (38a),
said control area (58) being provided between said lower piston part (38a) and said upper piston part (38b),
wherein a control pressure (p58) in said control area (58) acting on a larger lower area (58a) of said lower piston part (38a) and a smaller upper area (58b) of said upper piston part (38b), thereby resulting in a pressure force (F) relating to the area difference (58c) between said larger lower area (58a) and said smaller upper area (58b).

8. The air dryer (4) according to one of claim 7,
wherein said upper piston part (38b) is guided in said insert body (134) by an upper dynamic O-ring (39) and said lower piston part (38a) is guided in said insert body (134) by a lower dynamic O-ring (40).

9. The air dryer (4) according to claim 8, wherein said insert body (134) comprises
- an upper cover shield (52) provided radially inwards of said upper piston part (38b) for protecting the upper dynamic O-ring (39) against an air stream, and/or
- a lower cover shield (55) protruding from the piston (38) for protecting the lower dynamic O-ring (40) against an air stream.

10. The air dryer (4) according to one of claims 4 to 9,
wherein said piston (38) comprises one or more windows (57) between a surrounding outer space (51) and a piston interior (53), for discharging purge air, in particular through a silencer (110) mounted on the insert body (134).

11. The air dryer (4) according to one of the preceding claims, wherein a control chamber (56) is formed between said air dryer casing (24) and said purge valve assembly (34), said control chamber (56) being connected to said control area (58) of said piston (38) and to said regeneration connection (27) are formed in said air dryer casing, said air dryer casing (24) further comprising an air dryer flange (28) for mounting an air dryer cartridge (12).

12. The air dryer (4) according to one of the preceding claims, wherein a heating bore (30) for receiving a central heating device is provided in said air dryer casing (34), said heating bore (30) extending above said purge valve assembly (34).

13. Pneumatic system (1) of a commercial vehicle (2), said pneumatic system (1) comprising the air dryer (4) according to one of the preceding claims, a compressor (3), and a multi-circuit protection valve device (5) for supplying consumer circuits of said pneumatic system (1) with compressed air (8).

14. Process for assembling an air dryer (4) according to one of claims 1 to 12, comprising the steps:
assembling said piston (38) and said purge valve spring (44) in said purge valve assembly (34) and/or in said insert body (134) of said purge valve assembly (34) assembly (34), and
screwing said purge valve assembly (34) into said air dryer casing (24).

15. Process according to claim 14, wherein said purge sealing (46) is mounted on top of said piston (38) by gluing or vulcanizing, and afterwards said piston (38) is assembled in said purge valve assembly (34) and/or in said insert body (134) of said purge valve assembly (34).
